# EUROPEAN PATENT APPLICATION

(11) **EP 2 403 082 A1**
(43) Date of publication of application: **04.01.2012**
(21) Application number: 10251173.0
(22) Date of filing: 29.06.2010
(51) Int. Cl.: H02G 3/04

(54) **Cable guide**

(71) Applicant: British Telecommunications Public Limited Company, London EC1A 7AJ (GB)
(72) Inventor: The designation of the inventor has not yet been filed
(74) Representative: Brinck, Coreena Fiona Anne

(57) **Abstract**

A device for guiding cable comprising flexible elongate ducting with an internal channel, having a slot through which the cable may be inserted into the channel of the ducting, the slot extending in an irregular path along the length of the ducting.

## Description

This invention relates to apparatus and methods relating to the guidance, accommodation and retention of cabling, particularly but not limited to telecommunications exchange cables.

Cables in the form of optical fibre cables, bundles or individual units are deployed in modern telecommunications networks to provide high bandwidth optical links within the core parts of the network. Such cables also serve to interconnect equipment within telecommunications exchanges, often by use of flexibility racks (or suites comprising usually pairs of racks) which allow for any piece of exchange equipment to be interconnected with any other piece of exchange equipment. The term "interconnect" in this description includes the creation of an interconnection or link or connection by splicing fibres together, or by use of a mechanical or other connector. The "flexibility" of flexibility racks arises from their serving as junction or distribution points within the exchange so that a fibre or cable of the external network entering (or exiting) the building can be interconnected to a piece of equipment regardless of where the equipment is located.

Another way to provide the flexibility required within an exchange is to use optical fibre consolidation apparatus of the type described in e.g. WO2009/147403. This optical consolidation rack includes a number of optical fibre splice trays arranged in banks or sub-racks, and in contrast with optical flexibility racks, each splice tray is populated by a spliced fibre only when there is a need to make the connection e.g. when there is a customer requiring a connection. This means that not all the splice trays in the consolidation rack will be filled within spliced fibre on "day one", necessitating an engineer to revisit a sub-rack of splice trays a number of times to populate each tray as and when the need to make a connection arises.

When a connection to be made by splicing a fibre arriving at the consolidation rack, to another length of fibre which leads to e.g. an equipment rack, the arriving fibre is led to its destination splice tray within which it is spliced, and any excess fibre accommodated. As is well known, optical fibres are mechanically fragile and susceptible to the stresses caused by overbending, in which the fibre's minimum bend radius is exceeded. Overbending may result in the fibre's degraded optical performance or even mechanical damage. Even an optical cable with a tough outer sheath may be damaged in this way, so the single fibre unit should not be left dangling freely along any of its length before it enters its splice tray in a consolidation rack, but should be guided along its path into the tray. The risk of physical damage by any such exposure by snagging and so on, is exacerbated by need for repeated access to the particular sub-rack of splice trays as subsequent fibres are brought to and spliced within other trays within the sub-rack.

Conventional approaches to guiding the fibre between modules include simply dressing them (i.e. tying bundles of fibre), or using support rings attached to the modules to support the fibres travelling to or from or alongside the modules. Cable guides are also known solutions, and some examples of flexible cable guides or routers for use with equipment modules are described in US6742746, US7049521, and US2008/0131070. These cable guides generally take the form of a device having a base and two sidewalls on either side of the base, which together define a longitudinal trough. The walls include cut outs or (in the case of US2008/0131070) take the form of an assembly of discrete units spaced apart from each other, allowing for the device as a whole to be flexed. The flexibility of the guides in these disclosures serve to accommodate and define paths between modules which may not be completely in line with each other, to go around curves and corners, as well as enable obstructions to be avoided in a tight space.

Typically, these conventional cable guides are not moved again once they have put installed in place. This is because the fibres occupying the cable guides do not need to be moved. Also, while this is not explicitly described, it may be understood that any fibres needing to be added to those already populating the guides, will be simply included into the trough as necessary. For that reason, the means for avoiding fibre or cable from leaving the trough of the cable guides of the prior art are relatively rudimentary. US6742746 describes the use of snap-fit clips and rigid detent strips which extend the length of the trough (that latter would of course not work on a flexible guide), for confining the fibre within the trough. US7049521 discusses the inclusion of a flexible hinged cover, which is difficult to envisage, but presumably as a cover to the trough, this would include gaps in the case of a cable guide which has been flexed to describe a path which is other than linear. The cable guide of US2008/0131070 includes fastening tabs at spaced-apart intervals, which function in the same manner as the clips of US6742746.

If a cable guide were to be used to guide fibre to splice trays in an optical fibre consolidation rack of the type described above in connection with WO2009/147403, the cable guide would typically need to be moved every time the engineer opens the sub-rack to which the cable guide is attached. This is because not all of the trays in a particular sub-rack may be populated in a single session. As a result, the fibre(s) already in the trough or channel will be moved along with the cable guide every time the sub-rack is opened. This movement puts strain on the fibres within the cable guide, which needs to be managed especially in view of the fibre's minimum bend radius requirements. Furthermore, the resilient nature of glass fibres is that a length of fibre may "spring" out of its place within the channel when the cable guide is moved.

The cable guides of the prior art are unsuitable for deployment in an implementation wherein it is moved numerous time to enable to addition and accommodation of further fibres. This is because of the lack of management of fibres already within the guide when it is being moved.

In a first aspect, the present invention provides a device for guiding cable comprising flexible elongate ducting with an internal channel, having a slot through which the cable may be inserted into the channel of the ducting, the slot extending in an irregular path along the length of the ducting.

In embodiments of the invention, the cable guide comprises an almost-closed elongate channel. The slot along the length of the ducting allows for the cable guide to put into position to provide interconnection between two components or pieces or parts of equipment, and for the cable (such as an individual optical fibre or a fibre unit or bundle which is resilient along its length and prone to finding its own path and resting position) to be subsequently installed into the guide by inserting it along its length through the longitudinal slot. The configuration of the slot discourages cables already within the channel from escaping by springing out especially when the cable guide is moved or flexed (which in turn causes the cable to move within the channel). Due its "springy" characteristic, movement of cable within the guide needs to be controlled and managed to avoid it leaving the channel.

Specifically, the slot along the length of the ducting is narrow - just enough to allow for the width of the cable - which helps retain the cable within the channel even when the cable guide is moved. The irregular path of the slot reinforces this effect, as it is configured so that it does not coincide with any significant part of the cable path along its length within the channel regardless of whether the cable is lying still or moving. This divergence of the path of the slot and the path of the cable within the channel can achieved in a number of ways, e.g. by providing that the slot path is "randomly" irregular e.g. bending or curving so that so that at least a part of the cable is retained within the ducting owing to its inability to assume a profile identical to the curvature(s) of that part of the slot. In preferred embodiments discussed below, the slot incorporates one or more zig-zagging and relatively straight sections, which advantageously balance the need to retain the cable within the channel (the zig-zag section), and the need for speedy insertion of another cable into the channel (the linear section). Other embodiments within the scope of the invention includes a cable guide slot which is arranged to lie on the side of the channel opposite to the cable path when used in an optical consolidation rack leading to a shelf or sub-rack of fibre splice trays in specific "open" and "closed" positions assumed by the cable guide.

The skilled person would appreciate that the invention can be practised in a number of ways, but one preferred arrangement comprises a use of a number of split tubes being a tubular sub-unit including a slit, which are linearly or serially connected to each other.

In a second aspect, the present invention provides a system for consolidating cables within an exchange comprising an optical consolidation rack comprising a plurality of optical splice trays in a sub-rack, and a device of any preceding claim attached at a first end to the sub-rack and to fibre storage unit at a second end.

In a third aspect, the present invention provides a method of leading cables to one of a plurality of optical splice trays of a sub-rack in an optical consolidation rack, comprising
- providing and attaching to the sub-rack a device of the invention,
- opening the sub-rack causing the device to flex from a first position to a second position,
- inserting a first cable into the channel of the device starting from one end of the ducting by progressively pushing the length of the cable into and along the slot along its irregular path, and
- closing the sub-rack causing the device to flex from the second position back to the first position.

Embodiments of the invention will now be described by way of example only with reference to the accompanying drawings in which:
Figure 1 is a perspective view of the top and side of an embodiment of a cable guide of the invention;
Figures 2A and 2B depict the cable guide located within an optical consolidation rack;
Figure 3 is a perspective view of the bottom of the cable guide of the invention;
Figure 4 is a schematic depiction of the cross-section of the embodiment taken along the line X-X;
Figure 5 is a schematic depiction of the top plan of a central section of the embodiment showing hidden detail;
Figures 6A and 6B depict the cable guide in "open" and "closed" positions during use; and
Figure 7 depicts an example of an alternative configuration of the flexible cable guide of the invention.

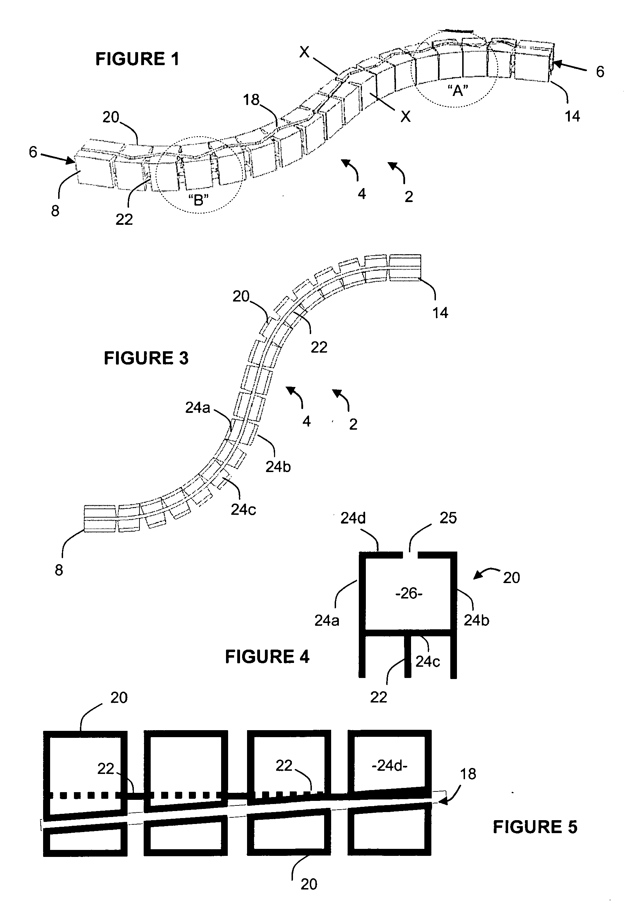

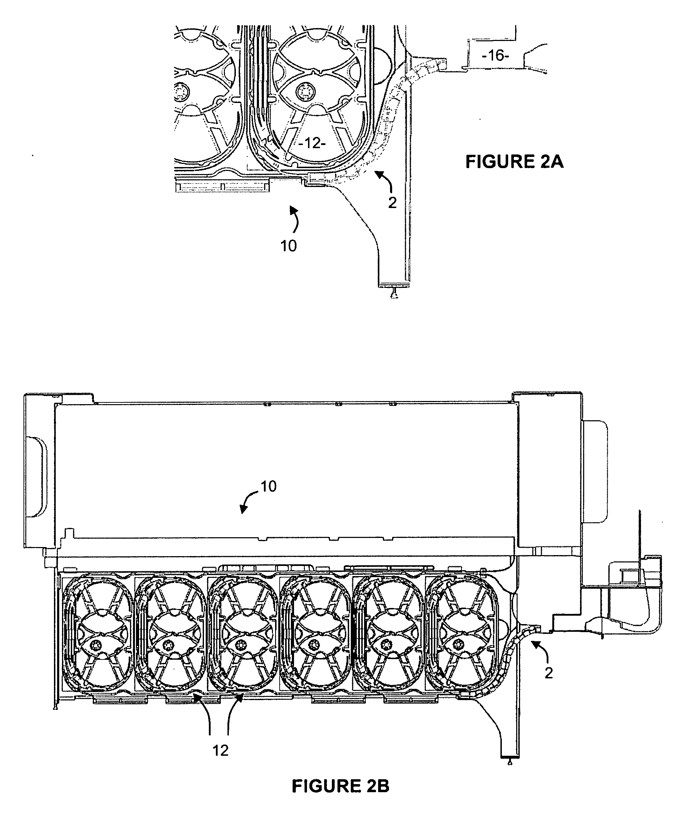

The view of a cable guiding device (2) shown in Figure 1 is an exemplary embodiment of the invention for use in an optical consolidation rack, which consists of an elongate ducting assembly (4) which includes within it a trough or a channel (6, Figure 4) allowing for accommodation of one or more cables (which reference includes any cable type, particularly a single optical fibre or a fibre unit, bundle or cable). The ends of the ducting are adapted for attachment to two different pieces or parts of equipment for which the device serves as an interconnection. The guide shown in Figures 1 and 2A includes one end (8) used for attachment to a bank or sub-rack (10) of optical splice trays (12) of the type which may be found in an optical consolidation rack discussed above. The other attachment end (14) serves to connect the cable guide to an input fibre manifold (16), which is another section within the consolidation rack. It is approximately 15 cm long in total, and the ducting section has square cross section of about 0.8 cm.

As can be seen from the drawings, the ducting assembly has an external cross section which is substantially square with four outwardly-facing surfaces. This is however not essential to the operation of the invention, and any quadrilateral or indeed curved surface profile along the length of the ducting may be used.

An access slot (18) extends along the length of the ducting on the upper or top surface of the ducting, allowing for a cable to be inserted into the channel within the ducting. References within this specification to "bottom", "side", "top" and such-like terms serve to describe the relation of the various sections of the cable guide to each other, are for ease of description only and do not limit the orientation and scope of use or application of the cable guide.

The slot is narrow across its width, which is preferably constant along the length of the ducting. Ideally, the slot should be little wider than the width of the cable it is to accommodate. In the embodiment shown, it takes an irregular path through the surface of the ducting, and includes two serpentine or zig-zagging sections, one towards each end of the ducting, as well as a relatively straight central section. The configuration of the slot will be discussed in greater detail further below. In the embodiment shown in the drawings, the slot extends the full length of the device including through both attachment endings. The skilled person would appreciate that the slot needs only to extend the length of the ducting, e.g. if the attachment endings arranged in an offset position from the path of the cable travelling through and out from the ducting ends.

The ducting assembly is formed of a number of ducting sub-units (20) which are linked together in a series by a central spine (22). The configuration of a ducting sub-unit will be discussed in greater detail below in connection with Figure 4, but generally it has walls (22) which almost but not completely surround a hollow (26) within, due to the presence of a slit (25) in the wall. As can be seen in Figure 1, the spine (22) links all the ducting sub-units in a series so that they held in an arrangement which spaces each sub-unit apart from each other. In this arrangement, the hollows (26) and the slits (26) of each sub-unit are lined up with the aggregate effect of forming, respectively, the central channel (6) and the slot (18) through the ducting assembly (4).

The cable guide is made to flex, so the spine is formed from a material such as high impact polystyrene. To reduce the cost of manufacturing, the guide can be entirely made out of the same material by injection moulding. The flexibility of the ducting assembly along its length is enhanced by the spacings between the sub-units, which are dimensioned so that the ducting is unable to bend more than is pre-determined. As briefly discussed above, optical fibre has a minimum bend radius, and the cable guide of the invention is configured to prevent overbending of the fragile fibre. The exact distance between the ducting sub-units would depend on the type of cable used: for example a spacing of 1mm between sub-units will respect a minimum bend radius of 20mm.

Overbending can be prevented in various ways e.g. by fashioning the spine out of a material having limited flexibility beyond a pre-determined extent, or by using an spine of an inflexible material which is mechanically constrained from allowing the ducting to bend beyond that permitted. In the present embodiment, this is achieved by use of a flexible spine in combination with the configuration of the walls of the spaced-apart sub-units. When the ducting is flexed, the walls close together and eventually impinge on each other at an angle so as to prevent further bending, as shown in the circled area "A" in Figure 1. An example of the corresponding opening bend on the opposite side of area "A" is illustrated in the circled area marked "B".

Figure 3 is a view of the bottom of the cable guide, which shows the ducting assembly (4) including the two attachment ends (8, 14). The spine (22) is a single continuous piece linking the sub-units (20) in a series to form the ducting assembly can be seen from this view, although it is not necessary that the spine be a single piece. As will be described further below in connection with Figure 4, the ducting channel occupies only a part of the entire height of the ducting.

Figure 4 is a schematic view of a cross section of a sub-unit (20) (and thus also of the ducting assembly (4) and the cable guide (2) as a whole) shown in Figure 1 along the line X-X. As can be seen, the wall (24) comprises four sections - two side walls (24a and 24b), a basewall (24c) and a topwall (24d). The sidewalls extend downwardly of the basewall to provide added strength in that axis so that the channel (26) defined by the wall occupies only a part of the overall height of the sub-unit, all or part of the remaining space is taken up by the spine which extends downwardly from the basewall. The hollows (26) of the sub-units which cumulatively form the ducting channel, are formed from the surrounding walls which but for the split (26), completely surround the hollow.

This part of the sub-unit is conceptually similar to a split tube in that it is almost entirely closes around the hollow within which is bore-like in that is extends through from one side to the other. The invention thus does not require that the cross-section of the overall ducting nor of the individual ducting sub-units take any particular shape or form, although in the preferred embodiment shown a squared-off profile along the length of the ducting helps to discourage cable from moving excessively when the cable guide is moved, as will be discussed further below.

Figure 5 is a schematic representation of the top plan view of four sub-units (20) linked together by the spine (20) forming part of the ducting assembly. As shown, the slit (25) is located through the topwall (24a) of each sub-unit (20) and fixed into place by the spine so that they have the cumulative effect of forming the access slot into which the cable can be inserted into. The location of the slot along the top surface of the ducting, on the opposite face to the spine extending along the basewall, together with the blade-like profile of the spine, helps to ensure that the flexible guide can flex only in directions orthogonal to the direction of the downward projection of the spine.

Turning back to Figure 1 which shows the full slot configuration, it may be noted that the slot extending through the length of the ducting is narrow and irregular. The purpose of this is to help retain cable within the channel when the cable is moved. As is known, optical fibre has an inherent resilience and "springiness" along its length, especially as it is supplied in spools. It is therefore liable to springing out of position within storage spaces unless appropriately confined. This tendency is increased when moved e.g. along with movement of the cable guide within which the cable sits.

As noted above, when the cable guide is used to bridge the gap between the sub-rack (10) of splice trays and the input fibre manifold (16), the likelihood is that the sub-rack will be opened a number of times for the gradual population of the splice trays within the rack. This means that cables already within the cable guide will be disrupted from its movement as it flexes from one position to another whenever the engineer opens and closes the sub-rack. For example, if the sub-rack is able to accommodate 12 splices, the sub-rack may be opened and closed that many times or more, in the event of equipment inspections, test and diagnosis, and the like.

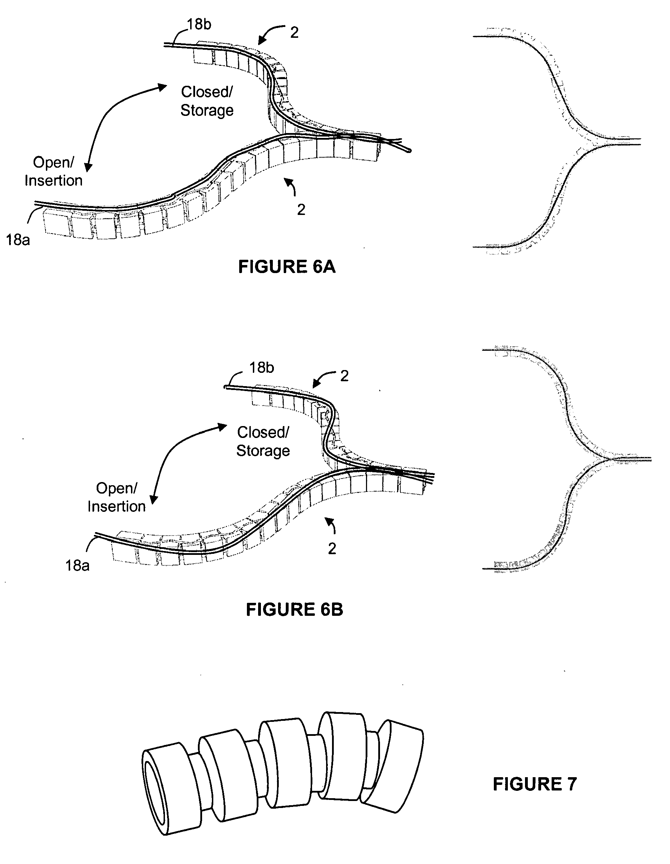

Figures 6A and 6B show the two extreme positions the cable guide (2) can take in an exemplary application when used in an optical consolidation rack, "closed" and "open" (which refers to the position of the sub-rack). A cable (18) is shown within the cable guide, in which the path taken in the closed position (18a) is different from that in the open position (18b). Due to the inherent resilience of the optical fibre cable, its location within the ducting channel must be allowed to move when the cable guide is flexed between positions. The use of a narrow slot along the ducting helps to reduce the chances of the fibre springing free in either extreme position as well as when the cable guide is moved.

The irregular path of the slot furthers this aim, by use of zig-zagging sections comprising a series or set of curved portions, which curve or is angled more tightly than the cable is inherently capable of bending. The embodiment depicts these sections towards each end of the ducting, but the skilled person would appreciate that the slot could follow such a path along its entire length. The zig-zags or curves need not follow any specific pattern (regular or otherwise), as long as the resulting slot or slot section is tighter than the cable is capable of bending as it shifts within the channel during flexing of the guide.

The zig-zags also help in the insertion of cable into the ducting through the slot. As noted above, optical fibre is "springy" and it is often at least fiddly to push it into an entirely linear slot for any significant distance due to the cable's naturally curved profile along its length. The zig-zagging section of the slot allows the engineer to "wriggle" the optical fibre cable into the slot by starting at one end and progressively inserting its length into the channel.

The retentive purpose of the guide is enhanced by slanting the slot from bottom left to upper right, as shown in the exemplary guide shown in Figures 1 and 5. After inserting the cable into the guide, the natural action of the engineer after insertion of the cable through the slot is to pull it straight through the channel. Hence the cable path tends to closely follow the curve of the cable guide. The slot is configured to substantially avoid the area(s) of greatest curvature of the guide in either position, as this is likely to be where the cable is resting within the channel.

As shown in the Figures 6A and 6B, the location of the sections of greatest curvature in the "open" and "closed" positions substantially mirror each other in an application within an optical consolidation rack. Use of the slanting slot configuration has the effect of positioning the cable furthest away from the slots across the tightest curve assumed by the flexing cable guide in either position. As a result, the cables are safely retained within the ducting channel in both positions and when moving from one position to another, when the cable(s) move within the cable guide.

The skilled person would appreciate that owing in part to the nature of the invention, many alternative implementations and configurations are possible, both in respect of the structure of the cable guide, its uses, the equipment and contexts of its use, and so on. For example, it is possible to obtain the flexibility of the cable guide by means other than a flexible spine. Figure 7 depicts one such alternative, having a hose-type configuration allowing for flexing between two positions.

The methods and configurations as described above and in the drawings are for ease of description only and not meant to restrict the apparatus or methods to a particular arrangement or process in use. It will be apparent to the skilled person that various sequences and permutations on the methods and apparatus described are possible within the scope of this invention as disclosed.

## Claims

1. A device for guiding cable comprising flexible elongate ducting with an internal channel, having a slot through which the cable may be inserted into the channel of the ducting, the slot extending in an irregular path along the length of the ducting.

2. A device according to claim 1 wherein the flexible ducting comprises a serial assembly of split tubes, each of the tubes comprising
- a wall substantially surrounding a hollow, and
- a slit along which the tube is split,
wherein the hollows are arranged in a series to form the channel, the slits are arranged in a series to form the slot, and the walls serve to retain the cable within the channel.

3. A device according to claim 2 wherein the tubes are spaced apart from each other in the serial assembly.

4. A device according to claim 3 wherein the spacing between a pair of tubes is dimensioned to prevent the walls of two adjacent tubes from meeting at less than a predefined angle during flexing of the ducting.

5. A device according to any one of claims 2 to 4 wherein the tubes are serially and flexibly linked by a spine.

6. A device according to claim 5 wherein the slot extends along a surface of the ducting opposite to the spine.

7. A device according to any preceding claim wherein the ducting is restricted to flex only in directions orthogonal to the path taken by the slot.

8. A device according to any preceding claim wherein the irregular path of the slot includes a first zig-zag section towards a first end of the ducting, a second zig-zag section towards a second, opposite, end of the ducting, and a substantially linear section between the first and second zig-zag sections.

9. A device according to any preceding claim wherein the ducting has an external quadrilateral external cross section, and wherein the irregular path of slot extends in a substantially diagonal manner across one surface of the ducting.

10. A device according to any preceding claim wherein the ducting is configured to flex between a first position for storage of a first cable already within the channel, and a second position for insertion of a second cable into the channel, in which when the ducting is in the first position or the second position or during flexing between the first position and the second position, the path of the first cable within the channel is substantially divergent from the path of the slot.

11. A system for consolidating cables within an exchange comprising an optical consolidation rack comprising a plurality of optical splice trays in a sub-rack, and a device of any preceding claim attached at a first end to the sub-rack and to fibre storage unit at a second end.

12. A method of leading cables to one of a plurality of optical splice trays of a sub-rack in an optical consolidation rack, comprising
- providing and attaching to the sub-rack a device of any one of claims 1 to 9,
- opening the sub-rack causing the device to flex from a first position to a second position,
- inserting a first cable into the channel of the device starting from one end of the ducting by progressively pushing the length of the cable into and along the slot along its irregular path, and
- closing the sub-rack causing the device to flex from the second position back to the first position.
